# FASCICULE DE BREVET EUROPEEN

(11) **EP 0 940 367 B1**
(45) Date de publication et mention de la délivrance du brevet: **29.10.2003**
(21) Numéro de dépôt: 99400184.0
(22) Date de dépôt: 27.01.1999
(51) Int. Cl.: C01B 21/084

(54) **Procédé de préparation de chlorure de nitrosyle**
Verfahren zur Herstellung von Nitrosylchlorid
Method for the preparation of nitrosyl chloride

(30) Priorité: 17.02.1998 FR 9801995
(43) Date de publication de la demande: 08.09.1999
(73) Titulaire: Atofina, 92800 Puteaux (FR)
(72) Inventeur: Devaux, Jean-Francois, 64110 Jurancon (FR); Monguillon, Bernard, 64270 Salies de Bearn (FR)

(56) Documents cités:
- US-A- 3 336 110
- US-A- 3 338 887
- CHEMICAL ABSTRACTS, vol. 75, no. 4, 26 juillet 1971 Columbus, Ohio, US; abstract no. 23293, ITKINA, D. YA. ET AL: "Production of nitrosyl chloride" XP002080154 & KHIM. PROM. (MOSCOW) (1971), 47(5), 366-8 CODEN: KPRMAW,
- CHEMICAL ABSTRACTS, vol. 71, no. 2, 14 juillet 1969 Columbus, Ohio, US; abstract no. 5017, TANABE, GIICHI ET AL: "Water evaporation from sulfuric acid-nitrosyl sulfate-water mixed solutions" XP002080155 & JP 43 028004 A (TOYO RAYON CO., LTD.)

## Description

La présente invention se rapporte à la préparation de chlorure de nitrosyle par réaction d'une solution d'acide nitrosylsulfurique dans l'acide sulfurique substantiellement exempte d'eau, de chlorure d'hydrogène gazeux et d'acide chlorhydrique aqueux.

Le chlorure de nitrosyle est un composé utilisé couramment dans les réactions de chloration, de diazotisation et de nitrosation de composés organiques.

En particulier, il est employé pour produire industriellement l'oxime de la cyclododécanone par photonitrosation du cyclododécane, laquelle est un intermédiaire de la synthèse de lauryllactame qui constitue le monomère de base du polyamide 12.

On connaît déjà diverses méthodes de préparation du chlorure de nitrosyle. Parmi celles qui permettent d'atteindre une production industrielle, on peut citer :
- le procédé qui consiste à faire réagir de l'acide nitrique, du monoxyde d'azote et de l'acide chlorhydrique ou un chlorure métallique (voir par exemple US 3 214 240),
- le procédé qui consiste à faire réagir de l'acide chlorhydrique aqueux avec du dioxyde d'azote gazeux (voir par exemple BE-B-626 426), et
- le procédé, en deux étapes, qui consiste à faire réagir un mélange gazeux d'oxyde azotique et de peroxyde d'azote avec de l'acide sulfurique de façon à obtenir une solution d'acide nitrosylsulfurique dans un mélange d'acide sulfurique et d'eau, puis à faire réagir cette solution avec du chlorure d'hydrogène gazeux à une température de 50 à 250°C dans des conditions telles que la teneur en eau de la solution soit comprise entre 2 et 13 % (voir FR 1 343 113).

Lorsqu'on met en oeuvre le dernier procédé, on peut être amené à effectuer les étapes précitées sur des sites industriels géographiquement distincts. On doit alors procéder à des opérations de transport et de stockage de la solution d'acide nitrosylsulfurique dans l'attente de sa mise en oeuvre à l'étape suivante.

Au cours de ces opérations, il apparaît des inconvénients.

Les solutions contenant plus de 40 % d'acide nitrosylsulfurique cristallisent lorsque la teneur en eau dépasse 10 %. Pour pallier cet inconvénient, il est alors nécessaire soit de réduire la teneur en acide nitrosylsulfurique ce qui se traduit par une diminution de la productivité, soit de chauffer la solution à une température de l'ordre de 50 à 100°C ce qui est coûteux.

La présence d'eau provoque à plus ou moins long terme une hydrolyse de l'acide nitrosylsulfurique ce qui diminue d'autant le rendement en chlorure de nitrosyle. L'hydrolyse est d'autant plus importante que la température est élevée.

Il a maintenant été trouvé que l'on peut remédier aux inconvénients précités, sans affecter notablement la conversion en chlorure de nitrosyle, en faisant réagir une solution d'acide nitrosylsufurique dans l'acide sulfurique substantiellement exempte d'eau avec du chlorure d'hydrogène gazeux et de l'acide chlorhydrique aqueux.

La présente invention a pour objet un procédé de préparation de chlorure de nitrosyle à partir d'une solution d'acide nitrosylsulfurique dans l'acide sulfurique et de chlorure d'hydrogène, ledit procédé étant caractérisé en ce que la solution d'acide nitrosylsulfurique est substantiellement exempte d'eau et que l'on utilise de l'acide chlorhydrique aqueux et du chlorure d'hydrogène en quantités telles que le rapport molaire de l'acide chlorhydrique aqueux à l'acide nitrosylsulfurique est compris entre 0,25 et 1,2, et le rapport molaire de l'acide chlorhydrique aqueux et du chlorure d'hydrogène gazeux à l'acide nitrosylsulfurique est compris entre 1,25 et 5.

Plus particulièrement, l'invention concerne un tel procédé dans lequel le rapport molaire de l'acide chlorhydrique aqueux à l'acide nitrosylsulfurique est compris entre 0,27 et 1,1, et le rapport molaire de l'acide chlorhydrique aqueux et du chlorure d'hydrogène gazeux à l'acide nitrosylsulfurique est compris entre 1,4 et 5.

Mieux encore, dans le procédé selon l'invention, le rapport molaire de l'acide chlorhydrique aqueux à l'acide nitrosylsulfurique est compris entre 0,35 et 0,50, et le rapport molaire de l'acide chlorhydrique aqueux et du chlorure d'hydrogène gazeux à l'acide nitrosylsulfurique est compris entre 1,5 et 2,5.

Le procédé sera mieux compris à la lumière de la description qui suit.

La solution d'acide nitrosylsulfurique dans l'acide sulfurique contient généralement 40 à 73 % en poids d'acide nitrosylsulfurique, et de préférence 55 à 70 % en poids. Elle peut éventuellement contenir jusqu'à 3 % en poids de trioxyde de soufre et jusqu'à 2 % en poids d'eau.

La solution d'acide nitrosylsulfurique dans l'acide sulfurique peut être obtenue selon des methodes bien connues de l'homme du métier, par exemple par réaction d'acide nitrique et de dioxyde de soufre, ou par réaction de monoxyde d'azote, de dioxyde d'azote et d'acide sulfurique (voir par exemple FR 1 343 113) et de préférence par réaction de monoxyde d'azote, de dioxyde d'azote et d'oléum. Il est possible de remplacer le mélange de monoxyde d'azote et de dioxyde d'azote par du sesquioxyde d'azote (N₂O₃).

Le chlorure d'hydrogène aqueux mis en oeuvre dans le procédé selon l'invention contient 20 à 37 % en poids de chlorure d'hydrogène, et de préférence 30 à 37 % en poids.

Il est avantageux d'adjoindre au chlorure d'hydrogène gazeux un gaz de stripping, de préférence inerte, qui a pour but d'améliorer l'extraction du chlorure de nitrosyle du mélange réactionnel. A titre d'exemple d'un tel gaz, on peut citer l'azote, l'argon, le méthane et les mélanges de ces gaz.

La température de la réaction est généralement comprise entre 10 et 200°C et, de préférence 20 et 100°C.

Le procédé selon l'invention peut être mis en oeuvre dans tout type de dispositif connu de l'homme du métier tel qu'un réacteur ou une colonne d'échange liquide/gaz, par exemple à plateaux. On utilise avantageusement une colonne à plateaux.

Le procédé selon l'invention peut fonctionner par lots ou en continu. On préfère le fonctionnement en continu.

La conversion de l'acide nitrosylsulfurique en chlorure de nitrosyle est au moins égale à 97 %, de préférence 99 % et mieux encore 99,5 %.

Le chlorure de nitrosyle récupéré dans le mélange gazeux contient une faible teneur en oxyde d'azote (inférieur à 1000 ppm en poids).

Le chlorure de nitrosyle peut être utilisé tel quel c'est-à-dire en mélange avec le chlorure d'hydrogène gazeux et le cas échéant le gaz de stripping ou subir une étape de purification, par exemple par refroidissement de manière à obtenir le chlorure de nitrosyle à l'état liquide et distillation à basse température.

L'effluent liquide contient essentiellement l'acide sulfurique en solution dans l'eau. La concentration de l'acide, qui varie selon la quantité de chlorure d'hydrogène aqueux mis en oeuvre, est généralement comprise entre 60 et 90 % en poids.

Les exemples qui suivent permettent d'illustrer l'invention.

Dans ces exemples, le titre en acide nitrosylsulfurique est mesuré selon la méthode qui consiste à opérer par décoloration d'une solution de permanganate de potassium.

Le rendement en chlorure de nitrosyle par rapport à l'acide nitrosylsulfurique est mesuré par absorption pendant un temps déterminé du gaz produit dans l'acide sulfurique et dosage de la solution obtenue par décoloration du permanganate de potassium.

### EXEMPLE 1

Dans une colonne en verre non thermostatée du type Oldershaw de diamètre égal à 35 mm comprenant 10 plateaux, on introduit à 23°C en continu en tête de la colonne une solution d'acide nitrosylsulfurique à 58,5 % en poids dans l'acide sulfurique (221 ml/h soit 1,99 mole/h), une solution aqueuse d'HCl à 31,4 % en poids (77 ml/h soit 0,76 mole/h) et, en pied de colonne, on injecte le gaz HCI anhydre (126 g/h soit 3,45 moles/h). Le rapport molaire de l'HCl aqueux à l'acide nitrosylsulfurique et de l'HCl total à l'acide nitrosylsulfurique est égal à 0,38 et 2,11 respectivement. L'effluent gazeux récupéré en tête de la colonne est constitué de chlorure de nitrosyle (61 % en poids) et d'HCl (39 % en poids), la teneur en oxydes d'azote étant inférieure à 400 ppm en poids (mesurée par spectroscopie IR).

Le rendement en chlorure de nitrosyle, calculé par l'absorption de l'effluent dans de l'acide sulfurique sur une période de 30 minutes, est supérieur à 97 %.

L'effluent liquide soutiré en continu en pied de colonne est essentiellement constitué d'acide sulfurique à 85 % en poids dans l'eau. La teneur résiduelle en acide nitrosylsulfurique et en acide chlorhydrique est égale à 2300 ppm en poids et 1500 ppm en poids respectivement, ce qui correspond à une conversion de l'acide nitrosylsulfurique égale à 99,6 %.

### EXEMPLE 2

On procède dans les conditions de l'exemple 1 modifié en ce qu'en tête de la colonne le débit de la solution d'acide nitrosylsulfurique est égal à 219 ml/h (soit 1,97 mole/h) et le débit de l'acide chlorhydrique aqueux est égal à 75 ml/h (soit 0,74 mole/h) et qu'en pied de la colonne on injecte un mélange de gaz HCI (128 g/h soit 3,5 moles/h) et d'azote (118 g/h).

Le rapport molaire de l'HCl aqueux à l'acide nitrosylsulfurique et de l'HCl total à l'acide nitrosylsulfurique est égal à 0,38 et 2,15 respectivement.

L'effluent gazeux récupéré est constitué de chlorure de nitrosyle (39 % en poids), d'HCI (25 % en poids) et d'azote (36 % en poids).

L'effluent liquide récupéré contient 900 ppm en poids d'acide nitrosylsulfurique résiduel, ce qui correspond à une conversion égale à 99,8 %.

### EXEMPLE 3

On procède dans les conditions de l'exemple 1 modifié en ce qu'en tête de la colonne le débit de la solution d'acide nitrosylsulfurique est égal à 236 ml/h (soit 2,13 moles/h) et le débit de l'acide chlorhydrique aqueux est égal à 59 ml/h (soit 0,58 mole/h) et qu'en pied de la colonne on injecte le gaz HCI à raison de 146 g/h (soit 4,0 moles/h).

Le rapport molaire de l'HCl aqueux à l'acide nitrosylsulfurique et de l'HCl total à l'acide nitrosylsulfurique est égal à 0,27 et 2,15 respectivement.

L'effluent liquide récupéré contient 1,8 % en poids d'acide nitrosylsulfurique résiduel, ce qui correspond à une conversion égale à 97,0 %.

### EXEMPLE 4 (Comparatif)

On procède dans les conditions de l'exemple 1 modifié en ce qu'en tête de la colonne le débit d'acide nitrosylsulfurique est égal à 230 ml/h (soit 2,08 moles/h) et que l'on procède sans l'introduction de la solution aqueuse d'HCl, et qu'en pied de colonne on injecte le gaz HCl à raison de 166 g/h (soit 4,5 moles/h).

Le rapport molaire de l'HCl total à l'acide nitrosylsulfurique est égal à 2,17.

L'effluent liquide récupéré contient 24,7 % en poids d'acide nitrosylsulfurique résiduel, ce qui correspond à une conversion égale à 55 %.

### EXEMPLE 5 (Comparatif)

On procède dans les conditions de l'exemple 1 modifié en ce que :
- la colonne est maintenue à 40°C,
- en tête de la colonne,
   - on introduit une solution contenant 42,2 % en poids d'acide nitrosylsulfurique, 49,8 % en poids d'acide sulfurique et 8 % en poids d'eau (232 ml/h soit 1,43 mole/h d'acide nitrosylsulfurique),
   - on supprime l'ajout de la solution aqueuse d'HCl
- en pied de la colonne,
   - on injecte le gaz HCI à raison de 118 g/h soit 3,2 moles/h.

Le rapport molaire de l'HCl total à l'acide nitrosylsulfurique est égal à 2,25.

L'effluent liquide récupéré contient 6,2 % en poids d'acide nitrosylsulfurique résiduel ce qui correspond à une conversion égale à 86,5 %.

### EXEMPLE 6 (Comparatif)

On procède dans les conditions de l'exemple 5 modifié en ce qu'en tête de la colonne on introduit une solution contenant 41,5 % en poids d'acide nitrosylsulfurique, 47,5 % en poids d'acide sulfurique et 11 % en poids d'eau (234 ml/h soit 1,38 mole/h d'acide nitrosylsulfurique) et qu'en pied de colonne on injecte le gaz HCI à raison de 110 g/h soit 3,0 moles/h

Le rapport molaire de l'HCl total à l'acide nitrosylsulfurique est égal à 2,18.

L'effluent liquide récupéré contient 0,78 % en poids d'acide nitrosylsulfurique résiduel, ce qui correspond à une conversion égale à 98,3 %.

## Revendications

1. Procédé de préparation de chlorure de nitrosyle à partir d'une solution d'acide nitrosylsulfurique dans l'acide sulfurique et de chlorure d'hydrogène, ledit procédé étant **caractérisé en ce que** la solution d'acide nitrosylsulfurique est exempte d'eau et que l'on utilise de l'acide chlorhydrique aqueux et du chlorure d'hydrogène en quantités telles que le rapport molaire de l'acide chlorhydrique aqueux à l'acide nitrosylsulfurique est compris entre 0,25 et 1,2, et le rapport molaire de l'acide chlorhydrique aqueux et du chlorure d'hydrogène gazeux à l'acide nitrosylsulfurique est compris entre 1,25 et 5. Le procédé étant mis en oeuvre dans une colonne d'échange liquide/gaz
• alimentée en tête par la solution d'acide nitrosylsulfurique dans l'acide sulfurique et l'acide chlorhydrique aqueux et en pied par le chlorure d'hydrogène
• et dans lequel on récupère en tête en phase gazeuse le chlorure de nitrosyle et le chlorure d'hydrogène en pied une solution aqueuse d'acide sulfurique contenant l'acide nitrosylsulfurique non converti et éventuellement de l'acide chlorhydrique.

2. Procédé selon la revendication 1, **caractérisé en ce que** le rapport molaire de l'acide chlorhydrique aqueux à l'acide nitrosylsulfurique est compris entre 0,27 et 1,1, et le rapport molaire de l'acide chlorhydrique aqueux et du chlorure d'hydrogène gazeux à l'acide nitrosylsulfurique est compris entre 1,4 et 5.

3. Procédé selon la revendication 2, **caractérisé en ce que** le rapport molaire de l'acide chlorhydrique aqueux à l'acide nitrosylsulfurique est compris entre 0,35 et 0,50 et le rapport molaire de l'acide chlorhydrique aqueux et du chlorure d'hydrogène gazeux à l'acide nitrosylsulfurique est compris entre 1,5 et 2,5.

4. Procédé selon l'une des revendications 1 à 3, **caractérisé en ce que** l'acide chlorhydrique aqueux contient 20 à 37 % en poids de chlorure d'hydrogène.

5. Procédé selon l'une des revendications 1 à 4, **caractérisé en ce que** la solution contient 40 à 73 % en poids d'acide nitrosylsulfurique dans l'acide sulfurique.

6. Procédé selon la revendication 5, **caractérisé en ce que** la solution contient 55 à 70 % en poids d'acide nitrosylsulfurique dans l'acide sulfurique.

7. Procédé selon l'une quelconque des revendications 1 à 6, **caractérisé en ce que** l'on utilise une colonne à plateaux.

## Patentansprüche

1. Verfahren zur Herstellung von Nitrosylchlorid ausgehend von einer Nitrosylschwefelsäurelösung in Schwefelsäure und von Chlorwasserstoff, wobei das Verfahren **dadurch gekennzeichnet ist, dass** die Nitrosylschwefelsäurelösung frei von Wasser ist und dass wäßerige Chlorwasserstoffsäure und Chlorwasserstoff in solchen Mengen verwendet werden, dass das Molverhältnis der wäßerigen Chlorwasserstoffsäure zur Nitrosylschwefelsäure zwischen 0,25 und 1,2 und das Molverhältnis der wäßerigen Chlorwasserstoffsäure und des gasförmigen Chlorwasserstoffes zur Nitrosylschwefelsäure zwischen 1,25 und 5 liegt, wobei das Verfahren in einer Flüssig-/Gas-Austauschsäule angewandt wird,
• die oben durch die Nitrosylschwefelsäurelösung in der Schwefelsäure und durch die wäßerige Chlorwasserstoffsäure und unten durch den Chlorwasserstoff versorgt wird,
• und in der oben in der gasförmigen Phase das Nitrosylchlorid und der Chlorwasserstoff und unten eine wäßerige Schwefelsäurelösung gewonnen werden, die nicht umgewandelte Nitrosylschwefelsäure und eventuell Chlorwasserstoffsäure enthält.

2. Verfahren nach Anspruch 1, **dadurch gekennzeichnet, dass** das Molverhältnis der wäßerigen Chlorwasserstoffsäure zur Nitrosylschwefelsäure zwischen 0,27 und 1,1 und das Molverhältnis der wäßerigen Chlorwasserstoffsäure und des gasförmigen Chlorwasserstoffes zur Nitrosylschwefelsäure zwischen 1,4 und 5 liegt.

3. Verfahren nach Anspruch 2, **dadurch gekennzeichnet, dass** das Molverhältnis der wäßerigen Chlorwasserstoffsäure zur Nitrosylschwefelsäure zwischen 0,35 und 0,50 und das Molverhältnis der wäßerigen Chlorwasserstoffsäure und des gasförmigen Chlorwasserstoffs zur Nitrosylschwefelsäure zwischen 1,5 und 2,5 liegt.

4. Verfahren nach einem der Ansprüche 1 bis 3, **dadurch gekennzeichnet, dass** die wäßerige Chlorwasserstoffsäure 20 bis 37 Gewichtsprozent Chlorwasserstoff enthält.

5. Verfahren nach einem der Ansprüche 1 bis 4, **dadurch gekennzeichnet, dass** die Lösung 40 bis 73 Gewichtsprozent Nitrosylschwefelsäure in der Schwefelsäure enthält.

6. Verfahren nach Anspruch 5, **dadurch gekennzeichnet, dass** die Lösung 55 bis 70 Gewichtsprozent Nitrosylschwefelsäure in der Schwefelsäure enthält.

7. Verfahren nach einem der Ansprüche 1 bis 6, **dadurch gekennzeichnet, dass** eine Bodensäule verwendet wird.

## Claims

1. Process for the preparation of nitrosyl chloride from a solution of nitrosylsulphuric acid in sulphuric acid and from hydrogen chloride, the said process being **characterized in that** the nitrosylsulphuric acid solution is devoid of water and **in that** aqueous hydrochloric acid and hydrogen chloride are used in amounts such that the molar ratio of the aqueous hydrochloric acid to the nitrosylsulphuric acid is between 0.25 and 1.2 and the molar ratio of the aqueous hydrochloric acid and of the gaseous hydrogen chloride to the nitrosylsulphuric acid is between 1.25 and 5, the process being carried out in a liquid/gas exchange column
• fed at the top with the solution of nitrosylsulphuric acid in sulphuric acid and the aqueous hydrochloric acid and at the bottom with the hydrogen chloride
• and in which process the nitrosyl chloride and the hydrogen chloride are recovered at the top in the gas phase and an aqueous sulphuric acid solution comprising the unconverted nitrosylsulphuric acid and possibly hydrochloric acid is recovered at the bottom.

2. Process according to Claim 1, **characterized in that** the molar ratio of the aqueous hydrochloric acid to the nitrosylsulphuric acid is between 0.27 and 1.1 and the molar ratio of the aqueous hydrochloric acid and of the gaseous hydrogen chloride to the nitrosylsulphuric acid is between 1.4 and 5.

3. Process according to Claim 2, **characterized in that** the molar ratio of the aqueous hydrochloric acid to the nitrosylsulphuric acid is between 0.35 and 0.50 and the molar ratio of the aqueous hydrochloric acid and of the gaseous hydrogen chloride to the nitrosylsulphuric acid is between 1.5 and 2.5.

4. Process according to one of Claims 1 to 3, **characterized in that** the aqueous hydrochloric acid comprises 20 to 37% by weight of hydrogen chloride.

5. Process according to one of Claims 1 to 4, **characterized in that** the solution comprises 40 to 73% by weight of nitrosylsulphuric acid in sulphuric acid.

6. Process according to Claim 5, **characterized in that** the solution comprises 55 to 70% by weight of nitrosylsulphuric acid in sulphuric acid.

7. Process according to any one of Claims 1 to 6, **characterized in that** a plate column is used.
